(19) Europäisches Patentamt / European Patent Office / Office européen des brevets

(11) **EP 1 154 366 B1**

(12) **FASCICULE DE BREVET EUROPEEN**

(45) Date de publication et mention
de la délivrance du brevet:
**30.03.2011 Bulletin 2011/13**

(51) Int Cl.:
***G06K 7/00*** *(2006.01)*

(21) Numéro de dépôt: **01410049.9**

(22) Date de dépôt: **11.05.2001**

(54) **Validation de la présence d'un transpondeur électromagnétique dans le champ d'un lecteur**

Präsenzbestätigung eines elektromagnetischen Transponders im Felde eines Lesers

Presence validation of an electromagnetic transponder in the field of a reader

(84) Etats contractants désignés:
**DE FR GB IT**

(30) Priorité: **12.05.2000 FR 0006071**

(43) Date de publication de la demande:
**14.11.2001 Bulletin 2001/46**

(73) Titulaire: **STMicroelectronics S.A.**
**92120 Montrouge (FR)**

(72) Inventeur: **Wuidart, Luc**
**83910 Pourrières (FR)**

(74) Mandataire: **de Beaumont, Michel**
**Cabinet Michel de Beaumont**
**1, rue Champollion**
**38000 Grenoble (FR)**

(56) Documents cités:
**EP-A- 0 722 094    EP-A- 0 857 981**
**WO-A-99/43096**

**EP 1 154 366 B1**

**Description**

La présente invention concerne des systèmes utilisant des transpondeurs électromagnétiques, c'est-à-dire des émetteurs-récepteurs (généralement mobiles) susceptibles d'être interrogés, sans contact et sans fil, par une unité (généralement fixe) dite borne de lecture et/ou d'écriture. Généralement, les transpondeurs extraient l'alimentation nécessaire aux circuits électroniques qu'ils comportent d'un champ haute fréquence rayonné par une antenne de la borne de lecture et d'écriture.

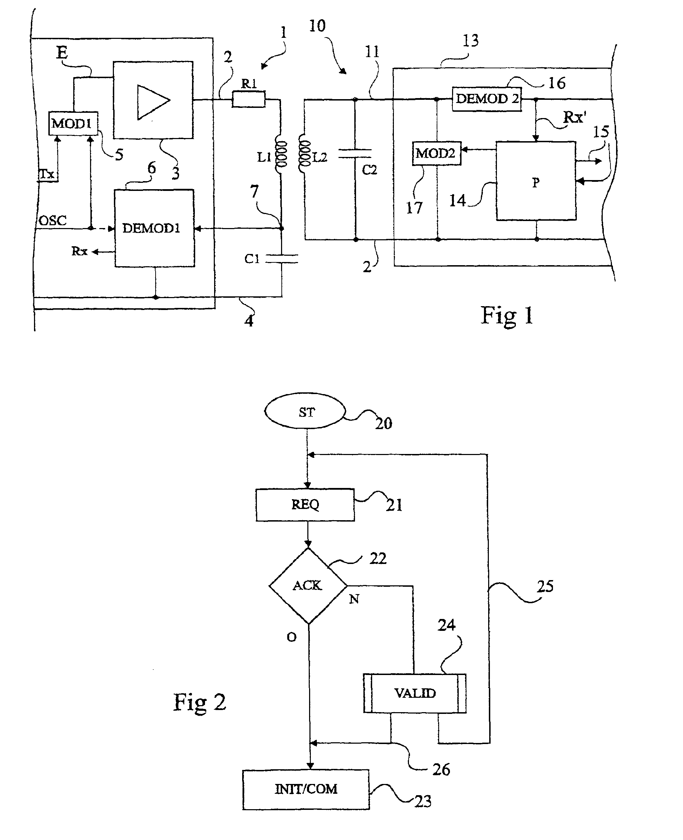

La figure 1 représente, de façon très schématique et simplifiée, un exemple classique de système d'échange de données du type auquel se rapporte la présente invention entre une borne 1 de lecture-écriture et un transpondeur 10.

Généralement, la borne 1 est essentiellement constituée d'un circuit oscillant série, formé d'une inductance L1 en série avec un condensateur C1 et une résistance R1, entre une borne 2 de sortie d'un amplificateur ou coupleur d'antenne 3 et une borne 4 à un potentiel de référence (généralement, la masse). L'amplificateur 3 reçoit un signal E de transmission haute fréquence, issu d'un modulateur 5 (MOD1) qui reçoit une fréquence de référence (signal OSC) par exemple, d'un oscillateur à quartz (non représenté). Le modulateur 5 reçoit, si besoin, un signal Tx de données à transmettre et, en l'absence de transmission de données depuis la borne, délivre la porteuse haute fréquence (par exemple, 13,56 MHz) propre à téléalimenter un transpondeur. En réception, la borne 1 utilise un démodulateur 6 (DEMOD1) qui sert à détecter une variation de charge engendrée par le transpondeur 10 sur le signal haute fréquence. Le démodulateur 6 prélève, par exemple, la tension aux bornes 7 et 4 du condensateur C1, et délivre un signal Rx de données reçues après démodulation.

D'autres circuits non représentés équipent généralement une borne 1. Parmi ces circuits, on retrouve, entre autres et de façon non limitative, un circuit de commande et d'exploitation des données reçues basé, le plus souvent, sur un microprocesseur de traitement des commandes et des données. Ces circuits communiquent généralement avec différents circuits d'entrée/sortie (clavier, écran, moyen d'échange avec un serveur, etc.) et/ou de traitement non représenté. Les circuits de la borne de lecture-écriture tirent l'énergie nécessaire à leur fonctionnement d'un circuit d'alimentation (non représenté) raccordé, par exemple, au réseau de distribution électrique ou à des batteries.

Un transpondeur 10, destiné à coopérer avec une borne 1, comporte essentiellement un circuit oscillant parallèle formé d'une inductance L2 en parallèle avec un condensateur C2 entre deux bornes 11 et 12 d'entrée d'un circuit 13 de commande et de traitement. Les bornes 11 et 12 sont, en pratique, reliées à l'entrée d'un moyen de redressement (non représenté) dont des sorties constituent des bornes d'alimentation continue des circuits internes au transpondeur. Ces circuits comprennent généralement, essentiellement, un microprocesseur 14 (P) susceptible de communiquer avec d'autres éléments (par exemple, une mémoire) par des liaisons 15. Le transpondeur 10 comprend en outre un démodulateur 16 (DEMOD2) des signaux reçus de la borne 1 qui délivre un signal Rx' au circuit 14, et un modulateur 17 (MOD2) pour transmettre, à la borne, des informations Tx' qu'il reçoit du circuit 14.

Les circuits oscillants de la borne et du transpondeur sont généralement accordés sur une même fréquence correspondant à la fréquence d'un signal d'excitation du circuit oscillant de la borne. Ce signal haute fréquence (par exemple 13,56 MHz) sert non seulement de porteuse de transmission mais également de porteuse de téléalimentation à destination du ou des transpondeurs se trouvant dans le champ de la borne. Quand un transpondeur 10 se trouve dans le champ d'une borne 1, une tension haute fréquence est engendrée aux bornes 11 et 12 de son circuit résonnant. Cette tension, après redressement et écrêtement éventuel, est destinée à fournir la tension d'alimentation des circuits électroniques 13 du transpondeur. Pour des raisons de clarté, les moyens de redressement, d'écrêtement et de fourniture d'alimentation n'ont pas été représentés en figure 1. On notera que, généralement, la démodulation (bloc 16) s'effectue en amont des moyens d'écrêtement pour préserver la modulation des données en amplitude sur la porteuse haute fréquence émise par la borne. Cette modulation d'amplitude s'effectue selon différentes techniques de codage afin de transmettre des données et/ou des commandes aux transpondeurs. En retour, la transmission de données Tx' du transpondeur vers une borne s'effectue généralement en modulant la charge constituée par le circuit résonnant L2, C2. C'est pourquoi le modulateur 17 a été représenté en parallèle sur ce circuit résonnant. La variation de charge s'effectue au rythme d'une sous porteuse, dite de rétromodulation, de fréquence (par exemple 847,5 kHz) inférieure à celle de la porteuse.

La variation de charge provenant d'un transpondeur peut alors être détectée par la borne sous la forme d'une variation d'amplitude ou d'une variation de phase au moyen, par exemple, d'une mesure de la tension aux bornes du condensateur C1 ou du courant dans le circuit oscillant à l'aide du démodulateur 6.

Un problème qui se pose dans les systèmes à transpondeur électromagnétique classiques est qu'il arrive qu'un transpondeur téléalimenté par une borne et émettant des données à destination de celle-ci ne soit pas détecté par la borne, c'est-à-dire que le démodulateur de la borne ne parvienne pas à détecter la présence d'une modulation de données. Ce phénomène est généralement désigné par l'expression "trou de démodulation". Pour un système donné, il s'agit d'une position relative d'une borne et d'un transpondeur à laquelle le démodulateur de la borne est "aveugle".

On notera que cette notion de trou de démodulation est différente de ce que l'on désigne par "trou de téléalimentation" où c'est le transpondeur qui ne parvient pas à être alimenté par le signal haute fréquence alors même qu'il est dans le champ électromagnétique de la borne. En effet, il existe une position relative entre un transpondeur et une borne à laquelle le couplage magnétique entre les circuits oscillants est tel que le transpondeur n'est pas alimenté, c'est-à-dire que la tension récupérée aux bornes 11 et 12 de son circuit oscillant est trop faible pour qu'il fonctionne. Dans un trou de démodulation, le transpondeur est correctement alimenté. Il détecte généralement correctement les données transmises par la borne en modulation d'amplitude. Il émet correctement des données à la borne en rétromodulation, par variation de la charge de son circuit oscillant. Toutefois, le démodulateur de la borne ne détecte pas cette rétromodulation.

Ce problème de trou de démodulation fait qu'une borne peut ne pas détecter un transpondeur présent dans son champ dans la mesure où cette détection fait classiquement appel au résultat du démodulateur de données côté borne. En particulier, lorsqu'elle est dans un état de veille en attente d'une transmission, une borne émet périodiquement des requêtes d'interrogation en modulant l'amplitude de la porteuse de téléalimentation. La borne surveille alors la sortie de son démodulateur qui lui indiquera la présence d'un transpondeur. En effet, quand un transpondeur se trouve "réveillé" par son entrée dans le champ d'une borne, celui-ci démodule le message d'interrogation transmis périodiquement par cette borne et y répond pour se faire identifier.

Un inconvénient supplémentaire est que, comme le transpondeur a de son côté reçu des données de la borne, celui-ci se croît identifié par la borne ce qui n'est pas vrai. Les seules techniques actuelles pour isoler ce phénomène sont de multiplier les échanges d'informations pour valider la transmission, ce qui est coûteux en terme de durée de transmission.

Différents systèmes à transpondeur du type auquel s'applique la présente invention sont décrits, par exemple, dans les brevets américains n° 4 963 887 et 5 550 536, ainsi que dans les demandes de brevets européens n° 0 722 094 et 0 857 981.

Dans une borne de lecture/écriture pourvue d'un démodulateur d'amplitude, la tension de sortie du démodulateur s'annule, c'est-à-dire que l'on est en présence d'un trou de démodulation dans deux configurations de fréquence de la porteuse (13,56 MHz) qui, pour un coefficient de couplage donné entre les circuits oscillants de la borne et du transpondeur concerné, encadrent la fréquence de résonance propre du circuit oscillant L2-C2 du transpondeur. De manière idéale, cette fréquence médiane correspond à l'accord parfait de la borne et du transpondeur sur la fréquence de la porteuse de téléalimentation, où l'amplitude disponible pour la démodulation est maximale.

On cherche généralement à ce que les circuits oscillants de la borne et du transpondeur soient tous deux accordés sur la fréquence de la porteuse de téléalimentation de façon à maximiser l'énergie de téléalimentation reçue par le transpondeur. Toutefois, les tolérances de fabrication des condensateurs utilisés pour les circuits oscillants, en particulier pour le condensateur C2 du transpondeur qui est généralement intégré, sont généralement de l'ordre de 10 %. L'importance de ces tolérances de fabrication conduit à ce que l'accord parfait n'est pratiquement pas respecté et que l'on ne peut garantir qu'un transpondeur entrant dans le champ d'une borne ne se trouvera pas, dans une position de couplage donnée, dans un trou de démodulation.

De plus, la position des trous de démodulation dans la réponse du démodulateur d'amplitude varie en fonction de la mutuelle inductance entre les circuits oscillants. Or, cette mutuelle inductance dépend de la distance qui sépare les antennes L1 et L2 de la borne et du transpondeur, donc de la position relative du transpondeur par rapport à la borne lors de la transmission.

Dans une borne de lecture/écriture pourvue d'un démodulateur de phase, la tension de sortie du démodulateur s'annule, c'est-à-dire que l'on est en présence d'un trou de démodulation dans une configuration de fréquence qui, pour un coefficient de couplage donné entre les circuits oscillants de la borne et du transpondeur concerné, correspond à l'accord parfait de la borne et du transpondeur sur la fréquence de la porteuse de téléalimentation. Côté transpondeur, cette fréquence est alors la fréquence de résonance propre du circuit oscillant L2-C2 du transpondeur.

On a déjà proposé de désaccorder à demeure les circuits oscillants de la borne et du transpondeur de façon à ce que ces deux circuits ne soient pas tous deux accordés sur la fréquence de la porteuse de téléalimentation. Toutefois, un inconvénient qui en découle est que cela nuit à la téléalimentation du transpondeur, et donc à la portée du système.

De plus, l'importance des tolérances de fabrication des condensateurs conduit à devoir se décaler sensiblement de la fréquence de la porteuse si l'on veut diminuer les risques de trous de démodulation.

Ainsi, un inconvénient notable des systèmes classiques à démodulation de phase, est que l'on est contraint d'effectuer un compromis entre la téléalimentation et la capacité de démodulation de phase par la borne. De plus, ce compromis est délicat à réaliser, la position du trou dans la réponse du démodulateur de phase variant en fonction de la mutuelle inductance entre les circuits oscillants.

Les problèmes combinés d'existence de trous de démodulation, et de la variation de la position de ces trous de démodulation par rapport à la distance entre les inductances, associés aux tolérances de fabrication des composants, rendent les systèmes classiques peu fiables.

La présente invention vise à pallier les inconvénients des systèmes classiques relatifs à la présence de trous de démodulation dans la réponse du démodulateur d'une borne de lecture-écriture.

Plus particulièrement, la présente invention vise à proposer un nouveau procédé de commande qui rende une borne de lecture-écriture insensible aux trous de démodulation des données qu'elle reçoit d'un transpondeur entré dans son champ.

La présente invention vise également à proposer une nouvelle borne insensible aux trous de démodulation des données qu'elle reçoit d'un transpondeur entré dans son champ.

La présente invention vise également à proposer une solution n'entraînant aucune modification des transpondeurs et qui soit par conséquent compatible avec les transpondeurs existants.

Le document WO-A-99/43096 décrit une borne de communication et un procédé de réglage de la puissance d'émission de cette borne en prévoyant de surveiller les caractéristiques d'impédance de l'antenne du terminal.

Pour atteindre ces objets, la présente invention prévoit un procédé de commande d'une borne de génération d'un champ électromagnétique au moyen d'un signal d'excitation d'un circuit oscillant, pourvue de moyens de régulation de la phase du signal dans le circuit oscillant, consistant à comparer des valeurs courantes de grandeurs liées au courant dans le circuit oscillant et à la tension à ses bornes par rapport à des valeurs prédéterminées, afin de détecter la présence d'un transpondeur dans le champ électromagnétique.

Selon un mode de réalisation de la présente invention, lesdites valeurs prédéterminées sont mesurées et mémorisées lors d'un fonctionnement à vide de la borne, alors qu'aucun transpondeur n'est présent dans son champ.

Selon un mode de réalisation de la présente invention, ladite détection de présence est mise en oeuvre quand un démodulateur que comporte la borne ne détecte aucun signal émis par un transpondeur.

Selon un mode de réalisation de la présente invention, le procédé consiste, en cas de présence détectée d'un transpondeur, à désactiver la régulation de phase, et à forcer la partie imaginaire de l'impédance du circuit oscillant de la borne à une valeur prédéterminée.

Selon un mode de réalisation de la présente invention, le forçage de ladite partie imaginaire est effectué en forçant la valeur d'un élément capacitif variable du circuit oscillant.

Selon un mode de réalisation de la présente invention, appliqué à une borne pourvue d'un démodulateur d'amplitude, la valeur prédéterminée de forçage de ladite partie imaginaire correspond à un fonctionnement à vide de la borne.

Selon un mode de réalisation de la présente invention, appliqué à une borne pourvue d'un démodulateur de phase, la valeur prédéterminée de forçage de ladite partie imaginaire est fonction de la position de cette partie imaginaire par rapport à une valeur limite correspondant à un fonctionnement à vide de la borne.

Selon un mode de réalisation de la présente invention, le procédé consiste, en cas de présence détectée d'un transpondeur et en cas d'absence de détection de données par un démodulateur actif parmi un démodulateur d'amplitude et un démodulateur de phase que comporte la borne, à sélectionner l'autre démodulateur pour détecter les données.

La présente invention prévoit également une borne de génération d'un champ électromagnétique propre à coopérer avec au moins un transpondeur lorsque ce dernier entre dans ce champ, et comportant des moyens pour mettre en oeuvre le procédé de l'invention.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :

la figure 1 représente, de façon très schématique et simplifiée, un exemple classique de système à transpondeur électromagnétique ;

la figure 2 représente, sous forme d'organigramme simplifié, un mode de mise en oeuvre du procédé de validation de la présence d'un transpondeur selon la présente invention ;

la figure 3A représente, partiellement et de façon schématique, un mode de réalisation d'une borne de lecture-écriture à démodulation d'amplitude selon la présente invention ;

la figure 3B représente, partiellement et de façon schématique, un mode de réalisation d'une borne de lecture-écriture à démodulation de phase selon la présente invention ;

la figure 4A illustre, sous forme d'organigramme, un mode de mise en oeuvre du procédé de validation de l'invention pour une démodulation d'amplitude ;

la figure 4B illustre, sous forme d'organigramme, un mode de mise en oeuvre du procédé de validation de l'invention pour une démodulation de phase ;

la figure 5A représente des exemples d'allure de l'amplitude du signal à démoduler disponible en entrée du démodulateur d'amplitude d'une borne de lecture-écriture en fonction de la capacité du circuit oscillant d'un transpondeur dans le champ de cette borne ;

la figure 5B représente des exemples d'allure de l'amplitude de la variation de phase disponible en entrée du démodulateur de phase d'une borne de lecture-écriture en fonction de la capacité du circuit oscillant d'un transpondeur entré dans le champ de cette borne ; et

la figure 6 représente, de façon très schématique et simplifiée, un mode de réalisation d'une borne de lecture-écriture selon une variante de l'invention.

Les mêmes éléments ont été désignés par les mêmes références aux différentes figures. Pour des raisons de clarté, seuls les éléments d'une borne et d'un transpondeur et seules les étapes de procédé d'échange d'informations qui sont nécessaires à la compréhension de l'invention ont été illustrés aux figures et seront décrits par la suite. En particulier, les détails constitutifs des modulateurs et démodulateurs n'ont pas été détaillés et sont à la portée de l'homme du métier à partir des indications fonctionnelles données ci-après. En outre, l'invention sera exposée en relation avec des transpondeurs utilisant une rétromodulation dite "résistive" pour faire varier la charge qu'ils constituent sur le circuit oscillant de la borne (les capacités des circuits oscillants des transpondeurs étant fixes), mais on notera que l'invention s'applique plus généralement à tout type de rétromodulation, par exemple à une rétromodulation dite "capacitive".

Une caractéristique de la présente invention est de prévoir une détermination directe de la présence d'un transpondeur dans le champ d'une borne de lecture-écriture, c'est-à-dire sans qu'il soit nécessaire d'interpréter des signaux démodulés de transmission de données émanant de ce transpondeur. Plus précisément, la présente invention prévoit, en cas d'absence d'un signal démodulé utilisable par la borne, de valider l'absence d'un transpondeur dans le champ de celle-ci par une autre détermination indépendante de l'existence d'une transmission de données.

Une autre caractéristique de la présente invention est de prévoir, en cas d'incohérence entre le résultat du démodulateur et de la détermination directe, une action correctrice permettant au démodulateur de la borne d'interpréter correctement les données reçues. Cette action correctrice s'effectue préférentiellement sur le circuit oscillant de la borne et, de préférence, sur l'élément capacitif de ce circuit.

La détermination de la présence ou de l'absence d'un transpondeur dans le champ de la borne s'effectue, selon l'invention, par une mesure du courant dans le circuit oscillant de la borne et de la tension aux bornes de son élément capacitif (ou de grandeurs directement liées au courant et à la tension), et en comparant les valeurs courantes obtenues à des valeurs mémorisées précédemment. Ces dernières correspondent, de préférence, à des valeurs mesurées dans une phase d'apprentissage où le lecteur est dans une configuration particulière.

Par la suite, l'action correctrice éventuelle peut faire appel à différents calculs et comparaisons, notamment, en fonction du type de démodulation (phase ou amplitude) utilisé par la borne.

La figure 2 est un organigramme simplifié d'un mode de mise en oeuvre d'une séquence de validation de la présence d'un transpondeur dans le champ de la borne, appliqué à l'état de veille d'une borne de lecture-écriture.

Dès qu'elle est mise sous tension et en fonctionnement, une borne de lecture-écriture de transpondeur débute (bloc 20, ST), après une phase d'allumage, d'initialisation et de test, une procédure de veille pendant laquelle elle attend l'établissement d'une communication avec un transpondeur. Cette procédure consiste, essentiellement, à envoyer (bloc 21) périodiquement une séquence d'interrogation (REQ) à destination du ou des transpondeurs éventuels présents dans le champ de la borne. Après chaque envoi de requête d'interrogation 21, le lecteur surveille (bloc 22) la réception, par son démodulateur, d'un message de réponse (ACK) provenant d'un transpondeur entré dans son champ.

Dans un procédé classique (non représenté), en l'absence de réponse, le lecteur se met en boucle sur l'envoi d'une interrogation 21. Lorsqu'il reçoit une réponse ACK, il passe dans un mode de vérification que le transpondeur est bien un transpondeur qui lui est destiné, ainsi que dans un mode éventuel d'anti-collision (bloc 23, INIT/COM) pour individualiser plusieurs transpondeurs éventuellement présents dans le champ. En effet, en réponse à une requête d'interrogation par une borne, si plusieurs transpondeurs sont présents dans le champ de celle-ci, ils peuvent répondre en même temps ou avec un décalage temporel suffisamment faible pour rendre le résultat de la démodulation par le lecteur inexploitable. Celui-ci doit alors, soit sélectionner un transpondeur avec lequel il veut communiquer, soit attribuer différents canaux aux différents transpondeurs.

Une communication ne débute que quand le processus d'initialisation et d'anti-collision illustré à la figure 2 par le bloc 23 est terminé. Dès qu'un transpondeur donné a été correctement identifié, celui-ci est placé dans un état où il ne répond plus aux requêtes d'interrogation pour ne pas polluer la détection des autres transpondeurs éventuels.

Un processus d'initialisation et d'anti-collision du type décrit brièvement ci-dessus est parfaitement connu. On trouve, par exemple, des illustrations de procédés classiques dans les demandes de brevet français n° 2 760 280 et 2 773 627 considérées comme connues.

Que ce soit pendant les procédures de veille ou pendant une communication, la borne exploite les résultats fournis par son démodulateur.

Selon la présente invention, à chaque fois que le lecteur s'attend à obtenir un résultat de son démodulateur et que ce résultat est négatif (bloc 22), on met en oeuvre une procédure de validation propre à l'invention (bloc 24, VALID).

Si la mise en oeuvre du procédé de l'invention valide l'absence de transpondeur dans le champ de la borne, on reprend l'envoi classique d'une requête d'interrogation (liaison 25). Par contre, si la vérification effectuée par l'invention infirme le résultat de démodulateur et indique qu'un transpondeur doit être présent dans le champ de la borne, on effectue une action correctrice sur son circuit oscillant avant de poursuivre l'initialisation de la communication (liaison 26).

Pour s'affranchir du problème de tolérance et de dérive des composants du circuit oscillant des transpondeurs, les valeurs de ces éléments pouvant de plus varier d'un transpondeur à l'autre, on prévoit selon la présente invention de réguler la phase du circuit oscillant de la borne par rapport à une valeur de référence. Selon l'invention, cette régulation de phase est effectuée au moyen d'une boucle dont le temps de réponse est choisi pour que la boucle soit suffisamment lente afin de ne pas gêner la rétromodulation éventuelle provenant d'un transpondeur, et soit suffisamment rapide devant la vitesse de passage d'un transpondeur dans le champ de la borne. On peut parler de régulation statique par rapport aux fréquences de modulation (par exemple, la fréquence de la porteuse de téléalimentation de 13,56 MHz, et la fréquence de rétromodulation de 847,5 kHz utilisée dans la transmission de données du transpondeur vers la borne).

Un tel asservissement de phase du circuit oscillant de la borne peut être mis en oeuvre en utilisant des moyens connus tels que ceux décrits, par exemple, dans la demande de brevet Européen n° 0 857 981 déjà citée. L'adaptation du système prévu par ce document pour la mise en oeuvre de l'invention, ou d'un autre système d'asservissement de phase connu, est à la portée de l'homme du métier à partir des indications fonctionnelles données dans la présente description.

Grâce au recours à une boucle de régulation de phase, on peut désormais exploiter des mesures de courant et de tension dans le circuit oscillant de la borne pour en déduire, selon l'invention, une information relative à la présence d'un ou plusieurs transpondeurs dans le champ.

Le courant, désigné par I, dans le circuit oscillant série de la borne (par exemple, mesuré par un transformateur d'intensité) est lié à la tension (Vg) dite de générateur, excitant le circuit oscillant, et à l'impédance apparente $Z1_{app}$ du circuit oscillant par la relation suivante :

$$Z1_{app} = \frac{Vg}{I} \qquad\qquad (1)$$

Or, en considérant que la résistance et l'inductance série du circuit oscillant de la borne ont des valeurs fixes et immuables, au moins pour une borne donnée, la tension d'excitation du circuit oscillant est proportionnelle par un coefficient constant à la tension (VC1) aux bornes de l'élément capacitif de la borne. Par conséquent, évaluer l'impédance apparente du circuit oscillant de la borne revient à évaluer le rapport entre la tension aux bornes de l'élément capacitif et le courant dans le circuit oscillant.

L'évaluation de la présence d'un transpondeur effectuée par l'invention utilise exclusivement les informations de courant dans le circuit oscillant de la borne et de tension aux bornes de celui-ci, plus précisément aux bornes de son élément capacitif (ou des informations directement liées, par des coefficients invariables et déterminés, à ces grandeurs).

Selon l'invention, on utilise les valeurs, dites "à vide", du courant et de la tension quand aucun transpondeur n'est présent dans le champ de la borne. Ces grandeurs électriques sont aisément mesurables côté borne de lecture-écriture, par exemple, dans une phase d'apprentissage, par exemple, qui suit l'implantation de la borne dans son site d'application.

Par la suite, en évaluant le rapport courant (ou une information liée) entre la tension aux bornes de l'élément capacitif et le courant dans le circuit oscillant, on peut en déduire la présence d'un transpondeur dans le champ.

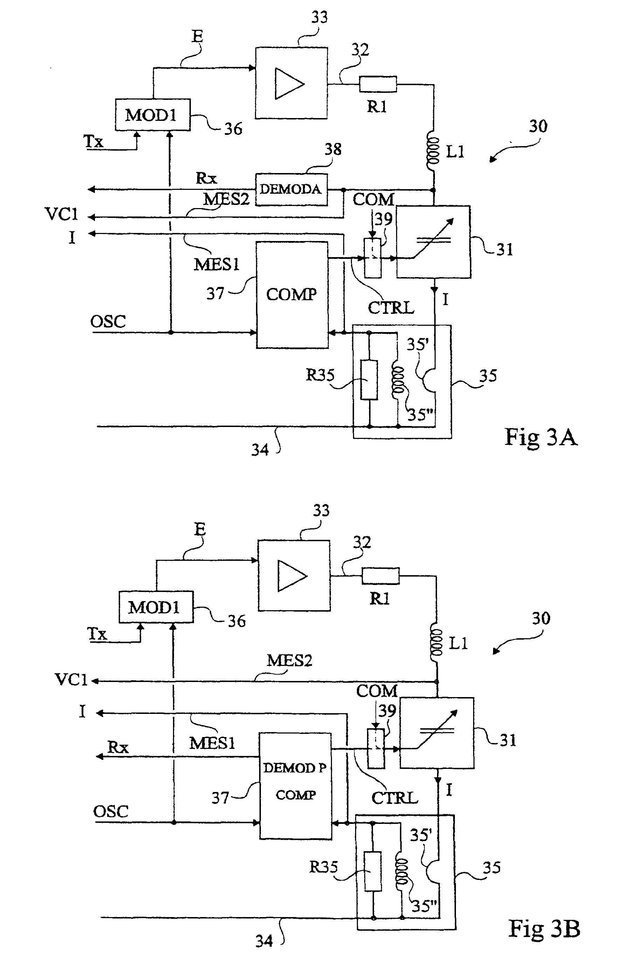

On décrira ci-après deux modes de réalisation de l'invention correspondants à deux actions correctrices à entreprendre selon le type de démodulateur de la borne de lecture-écriture. Un premier mode de réalisation appliqué à une démodulation d'amplitude par la borne sera décrit en relation avec les figures 3A, 4A et 5A.

La figure 3A représente, de façon schématique et simplifiée, un premier mode de réalisation d'une borne de lecture-écriture selon l'invention, équipée d'une boucle de régulation de phase du circuit oscillant et d'un démodulateur d'amplitude.

De façon classique, la borne 30 comporte un circuit oscillant formé d'une inductance ou antenne L1, en série avec un élément capacitif 31 et un élément résistif R1, entre une borne 32 de sortie d'un amplificateur ou coupleur d'antenne 33 et une borne 34 à un potentiel de référence, (généralement, la masse). Un élément de mesure 35 du courant dans le circuit oscillant est intercalé, par exemple, entre l'élément capacitif 31 et la masse 34. Cet élément de mesure 35 sert, notamment, à délivrer l'information du courant (I) à destination des moyens d'exploitation des données côté borne, constitués, par exemple, d'un microprocesseur (non représenté). L'amplificateur 33 reçoit un signal E de transmission haute fréquence, issu d'un modulateur 36 (MOD1) qui reçoit une fréquence de référence (signal OSC), par exemple, d'un oscillateur à quartz (non représenté). Le modulateur 36 reçoit, si besoin, un signal Tx de données à transmettre et, en l'absence de transmission de données depuis la borne, délivre la porteuse haute fréquence (par exemple 13,56 MHz) propre à téléalimenter un transpondeur. L'élément capacitif 31 est un élément à capacité variable et commandable par un signal CTRL.

On réalise une régulation de phase du courant dans l'antenne L1 par rapport à un signal de référence. Cette régulation est une régulation du signal haute fréquence, c'est-à-dire du signal de la porteuse correspondant au signal E en l'absence de données à transmettre. Cette régulation est effectuée en faisant varier la capacité du circuit oscillant de la borne 30 de façon à maintenir le courant dans l'antenne en relation de phase constante avec le signal de référence qui correspond, par exemple, au signal OSC fourni par l'oscillateur du modulateur. Toutefois, la régulation est suffisamment lente pour ne prendre en compte que les variations de phase statiques devant la sous porteuse de rétromodulation.

Le signal CTRL est issu d'un circuit 37 (COMP) dont le rôle est de détecter l'écart de phase par rapport au signal de référence et de modifier, en conséquence, la capacité de l'élément 31. Dans le présent exemple, la mesure de phase est effectuée à partir d'une mesure du courant I dans le circuit au moyen du transformateur d'intensité 35 monté en série avec l'élément 31. Ce transformateur est généralement constitué d'un enroulement primaire 35' entre l'élément 31 et la masse, et d'un enroulement secondaire 35" dont une première borne est reliée directement à la masse 34 et dont une deuxième borne délivre un signal MES1 fonction du courant I, envoyé au comparateur 37 qui asservit en conséquence l'élément capacitif 31 au moyen du signal CTRL.

Selon l'invention, le signal MES1 est également envoyé, comme cela a été indiqué précédemment, au microprocesseur ou analogue, pour mettre en oeuvre le procédé de validation de l'invention. Un deuxième signal de mesure MES2, délivrant une information relative à la tension VC1 aux bornes de l'élément capacitif 31, est également envoyé au microprocesseur. Ce signal est prélevé, par exemple, entre l'inductance L1 et l'élément 31.

Dans le mode de réalisation illustré par la figure 3A, la borne 30 comporte un démodulateur d'amplitude 38 (DEMODA) recevant en entrée, par exemple, la tension VC1 (ou une image du courant) aux bornes de l'élément capacitif 31 (plus précisément, aux bornes de l'association en série de cet élément capacitif 31 et du capteur d'intensité 35), et délivrant en sortie un signal Rx restituant une rétromodulation éventuelle de données reçues d'un transpondeur au reste des circuits électroniques de la borne non représentés.

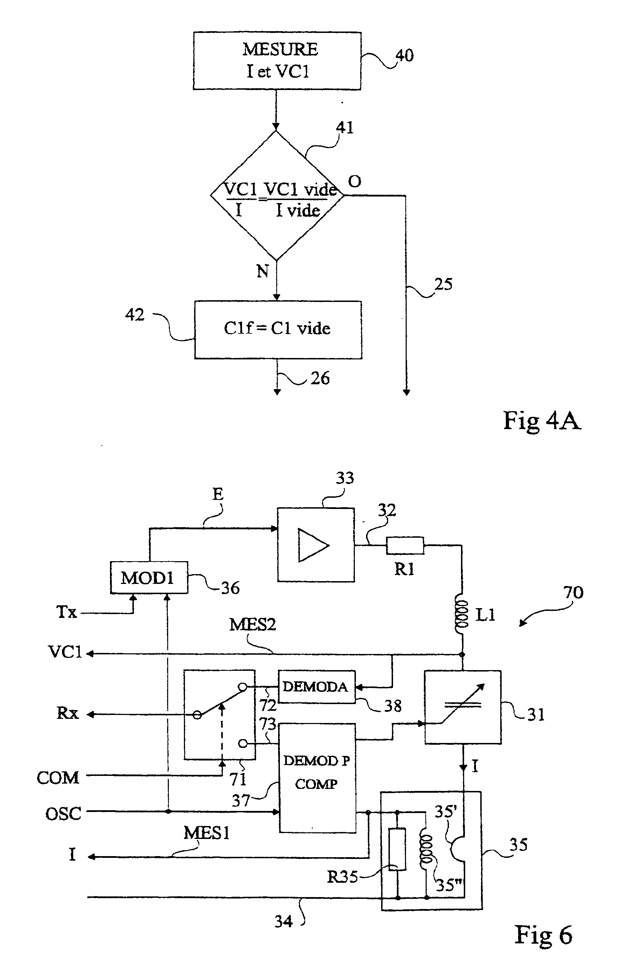

La figure 4A est un organigramme d'un mode de mise en oeuvre du procédé de validation (bloc 24, figure 2) de l'invention, appliqué à une démodulation d'amplitude.

Comme cela a déjà été indiqué précédemment, on commence par mesurer (bloc 40) le courant I et la tension VC1 dans le circuit oscillant. Puis, on compare (bloc 41) le rapport de la tension VC1 sur le courant I aux mêmes grandeurs mais mesurées à vide (VC1$_{vide}$ et I$_{vide}$) dans une phase d'apprentissage. Si les deux rapports sont identiques, cela signifie qu'aucun transpondeur n'est présent dans le champ de la borne et le procédé de validation en délivre l'information (liaison 25). Par contre, si les deux rapports sont différents, cela signifie que le démodulateur se trouve dans un trou de démodulation alors même qu'un transpondeur est présent dans le champ de la borne.

En effet, la partie imaginaire X1$_{app}$ de l'impédance apparente Z1$_{app}$ du circuit oscillant de la borne peut s'exprimer sous la forme :

$$X1_{app} = X1 - a^2 \cdot X2, \qquad (2)$$

où X1 représente la partie imaginaire de l'impédance du circuit oscillant de la borne, à savoir :

$$X1 = L1 \cdot \omega - \frac{1}{C1 \cdot \omega}, \qquad (3)$$

où X2 représente la partie imaginaire de l'impédance du circuit oscillant du transpondeur, à savoir :

$$X2 = L2 \cdot \omega - \frac{1}{C2 \cdot \omega}, \qquad (4)$$

et avec :

$$a^2 = \frac{k^2 \cdot \omega^2 \cdot L1 \cdot L2}{X2^2 + R2^2}, \qquad (5)$$

où $\omega$ représente la pulsation, et où R2 représente la charge constituée par les circuits oscillants du transpondeur sur son propre circuit oscillant, modélisée par une résistance en parallèle avec l'inductance L2 et le condensateur C2. En d'autres termes, la résistance R2 représente la résistance équivalente de tous les circuits (microprocesseurs, moyens de rétromodulation, etc.) du transpondeur, ramenée en parallèle sur le condensateur C2 et l'inductance L2.

Grâce à la régulation de phase, la partie imaginaire X1$_{app}$ est nulle. Par conséquent :

$$X1 = a^2 \cdot X2. \qquad\qquad (6)$$

A partir de ces relations, on peut exprimer la différence entre les valeurs courante et à vide de la façon suivante :

$$X1 - X1_{vide} = a^2 \cdot X2 - a_{vide}^2 \cdot X2. \qquad\qquad (7)$$

Or, le coefficient avide est nul dans la mesure où le couplage à vide est également nul. De plus, la tension VC1 aux bornes de l'élément 31 (en négligeant l'influence du transformateur d'intensité 35) peut s'écrire $I/\omega C1$. Il en découle que la formule (7) ci-dessus peut s'écrire :

$$a^2 X2 = \frac{VC1_{vide}}{I_{vide}} - \frac{VC1}{I}. \qquad\qquad (8)$$

Si l'expression 8 ci-dessus est différente de zéro, cela signifie non seulement qu'un transpondeur est présent dans le champ de la borne mais également que, pour ce transpondeur, la variable X2 est différente de 0, c'est-à-dire que son circuit oscillant est désaccordé même légèrement. Cela est parfaitement cohérent avec le fait que le transpondeur émet des données à destination de la borne, c'est-à-dire qu'il modifie la charge qu'il constitue sur le circuit oscillant de la borne.

En d'autres termes, on peut considérer que la formule ci-dessus ne s'annule que dans deux cas. Le premier cas correspond au cas où aucun transpondeur n'est présent dans le champ de la borne. Le second cas est celui où le condensateur C2 du circuit oscillant du transpondeur est parfaitement accordé sur la porteuse de téléalimentation. Dans ce cas, X2 = 0.

En pratique, les dispersions technologiques et dérives en fonctionnement du transpondeur conduisent à des variations de plus ou moins 10 % de la capacité du condensateur C2 par rapport à une valeur d'accord $C2_{acc}$. De plus, on ne peut généralement pas intervenir sur le transpondeur pour corriger ces variations. C'est notamment pourquoi la boucle de régulation de phase permet d'optimiser la téléalimentation du transpondeur en compensant ces éventuelles dérives par une modification de l'accord côté borne de lecture-écriture.

La correction effectuée selon l'invention pour sortir d'un trou de démodulation consiste, de préférence, à forcer la valeur de la capacité C1 de l'élément 31 sur une valeur prédéterminée lors de la phase d'apprentissage. Ce choix est lié au fait que la régulation de phase s'effectue de façon préférée par une modification de la capacité du circuit oscillant. Par conséquent, on prévoit un élément capacitif variable dont on peut ajuster la valeur, soit pour asservir la phase de façon statique dans le circuit oscillant, soit pour forcer la valeur de l'élément capacitif afin de décaler l'accord du circuit quand on est en présence d'un trou de démodulation.

Le forçage de la valeur de la capacité C1 s'effectue par exemple, au moyen d'un signal COM délivré par le processeur de traitement (non représenté) à un circuit 39 de sélection de la consigne de commande de l'élément 31 entre le signal CTRL délivré par circuit 37 et la valeur de forçage. La réalisation pratique de cette fonction est à la portée de l'homme du métier. On pourra, par exemple, prévoir que le signal COM véhiculant la consigne de capacité C1 prédéterminée est toujours prioritaire par rapport au signal CTRL véhiculant la consigne asservie, ou prévoir un signal de commande supplémentaire (non représenté) pour sélectionner une des deux entrées du circuit 39. En variante, on peut modifier le régulateur de phase pour pouvoir lui imposer une valeur de consigne différente permettant que la valeur forcée de la capacité C1 soit délivrée par le signal CTRL.

On notera qu'en forçant la valeur de la capacité, la phase dans le circuit oscillant n'est alors plus régulée. Toutefois, cette correction de l'invention n'intervient que dans des cas bien particuliers où le démodulateur est "aveugle". La valeur de régulation de la capacité est, bien entendu, retrouvée dès que cette situation disparaît, par exemple, dès que la communication avec le transpondeur concerné se termine.

Dans le mode de réalisation des figures 3A, 4A et 5A, on force (bloc 42) la capacité C1 de l'élément 31 du circuit oscillant sur une valeur $C1_f$ égale à la valeur $C1_{vide}$ que celui-ci avait à vide. Cette valeur de la capacité à vide peut aisément être mémorisée dans la phase d'apprentissage où on a mesuré les courant et tension à vide. Le processus d'initialisation (figure 2) se poursuit (liaison 26) sur la base de cette nouvelle valeur de capacité.

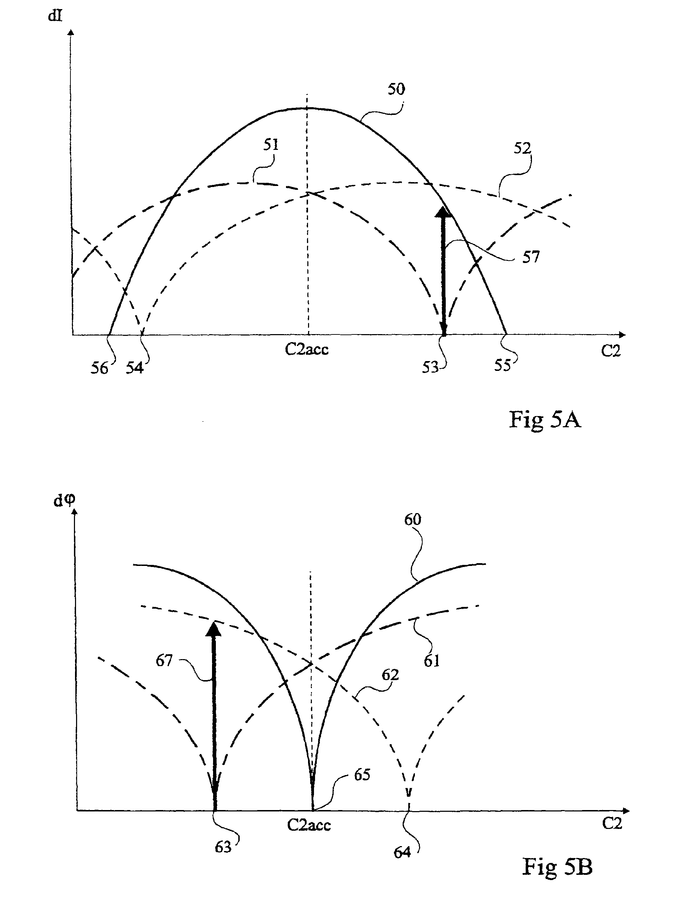

La figure 5A illustre le premier mode de mise en oeuvre du procédé de l'invention en représentant trois exemples d'amplitudes de variation dI du courant I, disponibles pour le démodulateur d'amplitude en fonction de la capacité C2 du transpondeur présent dans le champ de la borne. En d'autres termes, cela illustre le signal disponible pour exploiter une rétromodulation provenant d'un transpondeur au moyen du démodulateur d'amplitude.

La variation dI correspond, en première approximation, à la variation de tension dV aux bornes de l'élément 31, et représente le signal que doit détecter le démodulateur d'amplitude 38. Il s'agit donc d'une variation "dynamique" (au rythme de la sous porteuse de rétromodulation, par exemple, 847,5 kHz).

Une première courbe 50 tracée en trait plein correspond au cas idéal où la partie imaginaire de l'impédance X1 (formule 3) du circuit oscillant de la borne est nulle. Cela signifie que le circuit oscillant de la borne est parfaitement accordé, y compris dans son fonctionnement dynamique. Ce cas est idéal dans la mesure où le lecteur étant pourvu d'une boucle de phase, statique par rapport aux variations générées par la rétromodulation (par exemple, à 847 kHz), la valeur apparente $X1_{app}$ est statiquement nulle (formule 2). On se souviendra que le but premier de la boucle de phase statique est d'optimiser l'accord en fonction de la charge du transpondeur afin d'obtenir une portée optimale de téléalimentation de celui-ci. L'allure 50 forme une sorte de cloche centrée sur la valeur $C2_{acc}$ de la capacité d'un transpondeur parfaitement accordé sur la porteuse de téléalimentation.

Par rapport à ce cas idéal, on peut définir deux types de courbes respectivement 51 en traits mixtes et 52 en pointillés correspondant à deux cas réels où la partie imaginaire X1 du circuit oscillant de la borne est respectivement positive ou négative. Le cas où la partie imaginaire X1 est positive signifie que la valeur de la capacité C1 de l'élément 31 est supérieure à la valeur $C1_{vide}$. A l'inverse, le cas où la partie imaginaire X1 est négative correspond à une valeur de C1 inférieure à $C1_{vide}$. Dans chacune de ces courbes 51 et 52, on voit apparaître des points respectivement 53 et 54 dans lesquels la variation du courant dI est nulle. Ces points correspondent à des trous de démodulation. On notera que, sur la courbe 50 correspondant au cas idéal, on dispose également de deux passages par zéro 55 et 56, c'est-à-dire de deux trous de démodulation. Toutefois, ces points 55 et 56 correspondent, en pratique, à des valeurs de capacité C2 sortant des plages de tolérance et de dérive. Les trous 55 et 56 encadrent les points 53 et 54.

La mise en oeuvre de la correction prévue par l'invention correspond à déplacer le point de fonctionnement du lecteur jusqu'à la courbe idéale (allure 50). Cette action est symbolisée par une double flèche 57 au niveau du point 53 pris pour exemple. Quand on identifie un trou de démodulation, on force la valeur de la capacité C1 à sa valeur à vide. On fait alors sortir la borne du trou de démodulation, et le démodulateur de celle-ci dispose alors de suffisamment d'amplitude de signal pour lire le message envoyé par le transpondeur.

Selon un mode de réalisation particulier, où l'élément capacitif 31 de capacité variable est constitué d'une diode ou d'un transistor dont on fait varier la capacité de jonction en modifiant la tension appliquée à ses bornes, on peut considérer que cette tension de commande correspond à la tension VC1. Dans ce cas, il est possible de ne stocker, dans une phase d'apprentissage, que la valeur de la capacité à vide ainsi que le courant à vide. Puis, dès que l'on détecte un trou de démodulation, on polarise l'élément C1 à une valeur $VC1_{vide}$ que l'on calcule par la formule suivante :

$$VC1_{vide} = \frac{I_{vide}}{\omega \cdot C1_{vide}}. \qquad (9)$$

Un deuxième mode de réalisation de l'invention appliqué à une démodulation de phase par la borne sera décrit ci-après en relation avec les figures 3B, 4B et 5B qui sont à rapprocher des figures 3A, 4A et 5A qui viennent d'être décrites.

La figure 3B représente un mode de réalisation d'une borne 30 selon la présente invention appliquée à une démodulation de phase par celle-ci. La différence entre la borne de la figure 3B et celle de la figure 3A est principalement liée au démodulateur utilisé. Dans le cas de la figure 3B un démodulateur de phase (DEMODP) délivre le signal Rx de données démodulées à partir d'une évaluation du déphasage au rythme de la rétromodulation émise par un transpondeur. Selon un mode de réalisation préféré tel qu'illustré par la figure 3B, le comparateur 37 de la boucle de régulation de phase utilise le même détecteur de phase que celui qui sert à démoduler le signal provenant du transpondeur. Par conséquent, le signal Rx est délivré par le comparateur 37. On se souviendra cependant que l'interprétation du résultat de détection est différente. Le démodulateur tient compte des variations dynamiques (à la fréquence de la sous porteuse) tandis que le régulateur de phase tient compte des variations statiques. En variante, on pourra bien sûr utiliser deux détecteurs de phase distincts. Le reste de la borne 30 est similaire à la constitution exposée en relation avec la figure 3A appliquée à la démodulation d'amplitude.

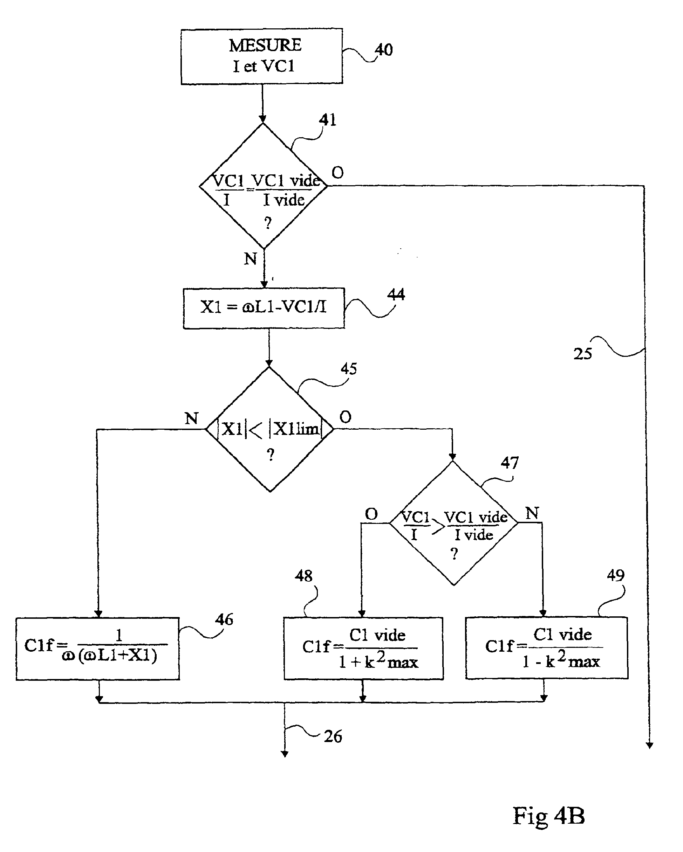

La figure 4B illustre, par un organigramme, la correction appliquée selon l'invention à la valeur de l'élément capacitif de la borne en présence d'un trou de démodulation de phase. Les blocs 40 et 41 sont similaires à ceux exposés en relation avec la figure 4A. Toutefois, dans le cas d'un démodulateur de phase, forcer la valeur de la capacité C1 sur sa valeur à vide reviendrait à forcer l'accord du circuit oscillant de la borne sur la fréquence de la porteuse. Or, on risque alors de se rapprocher du trou de démodulation centré sur l'accord parfait des circuits oscillants de la borne et du transpondeur.

La figure 5B représente trois exemples d'allure de variation dφ de la phase dans le circuit oscillant de la borne en fonction de la valeur prise par la capacité C2 du circuit oscillant du transpondeur. La figure 5B est à rapprocher de la figure 5A appliquée à la modulation d'amplitude.

Une première courbe 60 tracée en trait plein correspond au cas idéal où la partie imaginaire de l'impédance X1 (formule 3) du circuit oscillant de la borne est nulle. Comme précédemment, cela correspond au cas idéal d'un accord parfait de la borne.

L'allure 60 croît de façon hyperbolique, symétriquement de part et d'autre d'un minimum 65 à la valeur $C2_{acc}$ de la capacité d'un transpondeur parfaitement accordé sur la porteuse de téléalimentation et qui, en démodulation de phase, correspond à un trou de démodulation.

Par rapport à ce cas idéal, on peut définir deux types de courbes respectivement 61 en traits mixtes et 62 en pointillés correspondant à deux cas réels où la partie imaginaire du circuit oscillant de la borne est respectivement positive ou négative. Dans chacune de ces courbes 61 et 62, on voit apparaître des points, respectivement 63 et 64, dans lesquels la variation de phase dφ est nulle. Ces points correspondent à des trous de démodulation et encadrent le point 65. On notera que les courbes 61 et 62 présentent, chacune, un deuxième minimum, de l'autre côté du point 65 par rapport à leurs premiers minimums respectifs 63 et 64. Ces deuxièmes minima se trouvent cependant hors des plages de tolérance et de dérive des composants des transpondeurs. Par conséquent, on les considère impossibles en pratique. Dans l'exemple représenté, on a considéré des positions symétriques des minima 63 et 64 par rapport au minimum 65. Cela montre que les courbes 61 et 62 se croisent pour une valeur de la capacité C2 qui correspond à la valeur d'accord $C2_{acc}$.

On notera que, à la différence de la démodulation d'amplitude, le passage par zéro 65 de la courbe 60 représentant le cas idéal, correspond à une valeur de capacité C2 incluse dans les plages de tolérance et de dérive.

Trois trous 63, 64 et 65 de démodulation sont donc susceptibles d'être présents dans la réponse du démodulateur de phase. Selon l'invention, comme il n'est pas souhaitable de passer sur la courbe idéale, la correction à apporter diffère selon le trou de démodulation que l'on cherche à éviter. Par conséquent, quand le test du bloc 41 donne une réponse négative, on doit encore déterminer de quel trou de démodulation il s'agit. Pour ce faire, l'invention propose une nouvelle analyse du comportement des circuits oscillants d'une borne et d'un transpondeur pour déterminer, toujours à partir de valeurs calculées dans une phase d'apprentissage et d'une comparaison par rapport à des valeurs courantes, la correction à effectuer.

On gardera en mémoire que, pour ne pas affecter la téléalimentation du transpondeur, la correction doit, si possible, ne pas introduire de désaccord statique du circuit oscillant de la borne. En effet, on cherche à préserver l'effet bénéfique de la boucle de régulation de phase sur la téléalimentation du transpondeur. Pour maintenir la téléalimentation sans intervenir sur les composants du circuit oscillant du transpondeur, il faut que l'amplitude de la partie imaginaire X1 de l'impédance du circuit oscillant de la borne ne soit pas affectée par la correction. Cela revient à maintenir le module de la partie imaginaire X1.

A partir de l'illustration de la figure 5B, on prévoit selon l'invention de passer sur la courbe symétrique par rapport au point 65, c'est-à-dire sur la courbe représentant la partie imaginaire de signe opposé mais de même module. Cet effet est illustré, en figure 5B, par une flèche 67 illustrant la sortie du trou 63 de la courbe 61 en se décalant sur la courbe 62.

A partir de la relation 3 indiquée ci-dessus, cela revient à choisir, pour la capacité C1, la valeur de forçage $C1_f$ suivante :

$$C1_f = \frac{1}{\omega \cdot (\omega \cdot L1 + X1)}. \qquad (10)$$

Or la valeur courante de X1 (avant correction) est connue, soit parce que cette valeur est disponible au niveau du circuit de régulation de phase 37, soit à partir de la formule suivante :

$$X1 = \omega \cdot L1 - \frac{VC1}{I}. \qquad (11)$$

Dans l'exemple de la figure 4B, on prévoit de calculer (bloc 44) la partie imaginaire X1 à partir de la relation 11 ci-dessus. On notera que toutes les grandeurs nécessaires à ce calcul sont connues ou mesurables (bloc 40, figure 4B).

Toutefois, si le minimum 63 est proche du minimum 65, la correction prévue ci-dessus n'est pas suffisante car l'amplitude du signal utile restera insuffisante sur la courbe symétrique. Dans ce cas, l'invention prévoit de forcer une valeur de X1 de signe opposé et suffisamment grande pour s'écarter du trou d'accord "théorique" ou "idéal" 65. Cela revient à passer sur une autre courbe dont non seulement le minimum est séparé du minimum courant par le point 65, mais dont la valeur de l'impédance apparente est également différente. On doit donc accepter ici une diminution de la téléalimentation du transpondeur. On cherche cependant à ce que cette baisse soit minimale.

On peut montrer que le trou de démodulation tend vers la valeur $C2_{acc}$ lorsque la partie imaginaire X1 tend vers une valeur $X1 = k^2 \cdot \omega \cdot L1$, avec k compris entre 0 et $k_{max}$, où $k_{max}$ représente le coefficient de couplage maximal entre les circuits oscillants de la borne et du transpondeur, c'est-à-dire le coefficient de couplage entre ces deux circuits quand leurs antennes L1 et L2 respectives sont dans une relation de proximité maximale.

Comme $\omega \cdot L1$ est un invariant, seule la valeur de k influe sur celle de X1.

De plus, comme toutes les adaptations prévues par l'invention sont destinées à être effectuées en temps réel et automatiquement, on doit prévoir une valeur $C1_f$ de forçage aisément déterminable par calcul à partir de valeurs mémorisées et mesurées. Afin de disposer d'une valeur suffisante de X1, on peut forcer la valeur de k à $k_{max}$ pour se mettre dans les mêmes conditions que celles d'un transpondeur au couplage maximal où l'on sait qu'on est hors d'un trou de démodulation

Par conséquent, on prévoit de prédéterminer, dans la phase d'apprentissage, une valeur limite $X1_{lim}$ de la partie imaginaire de l'impédance du circuit oscillant de la borne en deçà de laquelle il ne faut pas descendre (en module). Cette valeur est donnée par la relation suivante :

$$X1_{lim} = k_{max}^2 \cdot \omega \cdot L1. \qquad (12)$$

Le coefficient $k_{max}$ est, de façon approximative mais suffisante, connu pour une famille de transpondeurs donnée à laquelle est destinée la borne considérée. Il est généralement compris entre environ 0,1 et 0,4.

Comme l'illustre la figure 4B, après avoir calculé la partie imaginaire courante X1 de l'impédance du circuit oscillant de la borne, on compare (bloc 45) son module au module de la valeur limite $X1_{lim}$.

Si le module courant est supérieur ou égal au module limite, on peut procéder de la façon indiquée ci-dessus et on applique (bloc 46) la valeur de forçage de la relation 10 ci-dessus.

Si le module courant est inférieur au module limite, on cherche à déterminer de quel côté on se trouve par rapport à la valeur à vide. On compare donc les rapports des tension VC1 et courant I mesurés et à vide (bloc 47). Cela revient à déterminer si on est en présence d'une partie imaginaire X1 positive ou négative.

Si le rapport courant est supérieur au rapport à vide, on applique (bloc 48) la valeur de forçage suivante :

$$C1_f = \frac{C1_{vide}}{1 + k_{max}^2}. \qquad (13)$$

Si le rapport courant est inférieur au rapport à vide, on applique (bloc 49) la valeur de forçage suivante :

$$C1_f = \frac{C1_{vide}}{1 - k_{max}^2}. \qquad (14)$$

Une fois la capacité de l'élément 31 forcée, le processus d'initialisation (figure 2) se poursuit (liaison 26) sur la base de cette nouvelle valeur de capacité.

En appliquant l'exemple de valeurs généralement constatées où $k_{max}$ est compris entre 0,1 et 0,4, l'application des relations 13 et 14 conduit à choisir, dans le premier cas, une valeur $C1_f$ comprise entre, environ, 0,8 et 0,9 fois la valeur $C1_{vide}$ et, dans le second cas, une valeur $C1_f$ comprise entre, environ, 1,1 et 1,2 fois la valeur $C1_{vide}$.

On notera que le déphasage dynamique $d\varphi$ peut être mesuré, soit sur le courant I, soit sur la tension VC1 ou analogue. Par conséquent, l'invention s'applique également au cas où d'autres moyens qu'un capteur d'intensité sont utilisés pour détecter le déphasage. Cela dépend du type de démodulateur de phase utilisé.

La figure 6 représente, de façon schématique et simplifiée, un troisième mode de réalisation de la présente invention appliqué à une borne 70 de lecture-écriture pourvue, pour la démodulation des signaux issus d'une rétromodulation par un transpondeur, à la fois d'un démodulateur de phase (DEMODP) et d'un démodulateur d'amplitude (DEMODA). L'interprétation de l'existence d'un transpondeur dans le champ de la borne sert alors, non pas à modifier la capacité de l'élément variable du circuit oscillant de la borne, mais à sélectionner le démodulateur à utiliser pour extraire le signal Rx. En effet, comme il ressert de l'exposé ci-dessus des figures 5A et 5B, les trous de démodulation n'ont pas les mêmes positions (en valeur de la capacité C2) selon que la borne démodule en amplitude ou en phase. De plus, en présence d'un trou de démodulation d'amplitude (respectivement de phase), on est sûr que le démodulateur de type opposé n'est pas "aveugle" dans la mesure où le changement de démodulateur ne modifie pas la partie imaginaire $X1_{app}$ de l'impédance apparente. Par exemple, à partir des figures 5A et 5B, changer de démodulateur quand on est dans un trou, par exemple 53 ou 54, revient à se placer sur la courbe 61, respectivement 62, pour une même valeur de capacité C2.

La borne 70 comprend les mêmes éléments que ceux communs aux bornes 30 des figures 3A et 3B à l'exception du circuit 39. Elle comporte en outre un démodulateur d'amplitude 38 raccordé comme en figure 3A et un démodulateur de phase, de préférence, similaire à celui de la figure 3B. Un circuit 71 de sélection reçoit les sorties respectives 72 et 73 des démodulateurs d'amplitude et de phase et délivre le signal Rx à destination du processeur de traitement (non représenté). Le circuit 71 est commandé par un signal COM à deux états, issu du processeur de traitement et obtenu, de préférence, d'une façon similaire à celle des modes de réalisation décrits précédemment. On détermine un démodulateur prioritaire, c'est-à-dire sélectionné en l'absence de trou de démodulation. On met alors en oeuvre un procédé de validation simplifié consistant, par rapport aux organigrammes des figures 4A et 4B, à détecter la présence d'un trou de démodulation. Dans l'affirmative, le signal COM commute pour entraîner la sélection de la sortie de l'autre démodulateur. En variante, le circuit de sélection peut être placé en amont des démodulateurs.

Un avantage de la présente invention est qu'au moyen d'une détermination de grandeurs électriques aisément mesurables, on améliore considérablement la fiabilité du fonctionnement d'une borne de lecture-écriture de transpondeurs électromagnétiques.

Un autre avantage de l'invention est que l'on intervient que côté borne de lecture-écriture. Par conséquent, le fonctionnement du transpondeur présent dans le champ de la borne n'en est pas affecté et l'invention peut être mise en oeuvre avec des transpondeurs classiques existants.

Un autre avantage de l'invention est qu'en choisissant d'intervenir sur la grandeur de réglage de la boucle statique de régulation de phase, on minimise les modifications structurelles de la borne.

Un autre avantage de la présente invention est qu'elle rend le fonctionnement du système à transpondeur, insensible aux trous de démodulation.

Un autre avantage de la présente invention est que la correction mise en oeuvre ne nuit pas à la téléalimentation du transpondeur.

Un autre avantage de la présente invention est qu'elle ne nécessite aucune adaptation en fonction de la sensibilité du démodulateur. On peut même considérer qu'elle s'adapte automatiquement à une variation du seuil de démodulation. En effet, comme la correction opérée par l'invention est mise en oeuvre à partir du résultat de démodulation, elle est indépendante du seuil de détection du démodulateur.

Bien entendu, la présente invention est susceptible de diverses variantes et modifications qui apparaîtront à l'homme de l'art. En particulier, la mise en oeuvre pratique du procédé de validation de l'invention au moyen des constituants classiques d'une borne de lecture-écriture est à la portée de l'homme du métier à partir des indications fonctionnelles données ci-dessus et de l'application considérée.

De plus, bien que l'on ait fait référence dans la description qui précède à la présence d'un transpondeur avec lequel la borne doit communiquer, l'invention s'applique également au cas où plusieurs transpondeurs doivent communiquer avec une même borne. De façon simplifiée, on peut alors prévoir de forcer la valeur de la capacité C1 dès qu'un des transpondeurs a été identifié comme posant un problème de trou de démodulation. On considère alors que l'atténuation du signal utile qui peut en découler pour les autres transpondeurs est supportable. Toutefois, dans un mode de réalisation préféré, on tient compte du fait que la valeur forcée pour un transpondeur présente un risque, même faible, de placer un autre transpondeur dans un trou de démodulation. On prévoit alors d'individualiser les valeurs des capacités de l'élément 31 de la borne aux différents transpondeurs. Cela est possible quand les communications de plusieurs transpondeurs avec une même borne sont séparées dans des canaux temporels. On peut alors, soit mémoriser les valeurs de capacité C1 lors de la détection des transpondeurs et imposer une de ces valeurs à chaque changement de canal (donc de transpondeur), soit prévoir les étapes de validation (bloc 24, figure 2) à chaque début de transmission d'une séquence de données d'un transpondeur vers la borne. Un avantage de cette dernière solution est qu'elle prend alors en compte les éventuels déplacements d'un transpondeur en cours de communication. On notera qu'il est possible de mettre en oeuvre cette dernière solution dans le cas d'un seul transpondeur pour tirer profit de ce dernier avantage.

En outre, dans la description qui précède, on a considéré que la valeur de la capacité C2 était fixe, c'est-à-dire que la rétromodulation s'effectuait par variation de la résistance équivalente R2. Cependant, l'invention se transpose au cas d'une rétromodulation "capacitive" qui modifie la valeur de la capacité C2 au rythme de la sous porteuse. Dans ce cas, les trous de démodulation sont fonctions de la résistance R2 et varient donc en fonction de la consommation des circuits du transpondeur. Le principe de détection exposé ci-dessus n'est en rien modifié. On adaptera simplement la correction côté borne.

Enfin, si la détermination à partir de la tension aux bornes de l'élément capacitif 31 constitue une solution particulièrement simple à mettre en oeuvre, on pourra tenir compte d'une tension équivalente prélevée en d'autres points, pourvu qu'elle soit liée à la tension aux bornes du circuit oscillant de la borne et soit sensible (dynamiquement) aux variations provoquées par la rétromodulation d'un transpondeur.

**EP 1 154 366 B1**

**Revendications**

1. Procédé de commande d'une borne (30, 60) de génération d'un champ électromagnétique au moyen d'un signal d'excitation d'un circuit oscillant, pourvue de moyens (37) de régulation de la phase du signal dans le circuit oscillant et d'un démodulateur (38, DEMODP), **caractérisé en ce que** des valeurs courantes (I, VC1) de grandeurs liées au courant dans le circuit oscillant et à la tension à ses bornes sont comparées à des valeurs prédéterminées ($I_{vide}$, $VC1_{vide}$) quand le démodulateur ne détecte aucun signal émis par un transpondeur (10), afin de détecter la présence d'un tel transpondeur dans le champ électromagnétique.

2. Procédé selon la revendication 1, **caractérisé en ce que** lesdites valeurs prédéterminées ($I_{vide}$, $VC1_{vide}$) sont mesurées et mémorisées lors d'un fonctionnement à vide de la borne (30, 60), alors qu'aucun transpondeur (10) n'est présent dans son champ.

3. Procédé selon la revendication 1 ou 2, **caractérisé en ce qu'**il consiste, en cas de présence détectée d'un transpondeur :

   à désactiver la régulation de phase ; et
   à forcer la partie imaginaire (X1) de l'impédance (Z1) du circuit oscillant de la borne (30) à une valeur prédéterminée.

4. Procédé selon la revendication 3, **caractérisé en ce que** le forçage de ladite partie imaginaire (X1) est effectué en forçant la valeur (C1) d'un élément capacitif variable (31) du circuit oscillant.

5. Procédé selon la revendication 3 ou 4, appliqué à une borne (30) pourvue d'un démodulateur d'amplitude (38), **caractérisé en ce que** la valeur prédéterminée de forçage de ladite partie imaginaire (X1) correspond à un fonctionnement à vide de la borne.

6. Procédé selon la revendication 3 ou 4, appliqué à une borne (30) pourvue d'un démodulateur de phase (DEMODP), **caractérisé en ce que** la valeur prédéterminée de forçage de ladite partie imaginaire (X1)est fonction de la position de cette partie imaginaire par rapport à une valeur limite correspondant à un fonctionnement à vide de la borne.

7. Procédé selon l'une quelconque des revendications 1 à 6, **caractérisé en ce qu'**il consiste, en cas de présence détectée d'un transpondeur et en cas d'absence de détection de données par un démodulateur actif parmi un démodulateur d'amplitude (38) et un démodulateur de phase (37) que comporte la borne (60), à sélectionner l'autre démodulateur pour détecter les données.

8. Borne (30, 60) de génération d'un champ électromagnétique propre à coopérer avec au moins un transpondeur (10) lorsque ce dernier entre dans ce champ, **caractérisée en ce qu'elle** comporte des moyens pour mettre en oeuvre un procédé conforme à l'une quelconqué des revendications 1 à 7.

**Claims**

1. A method for controlling a terminal (30, 60) of generation of an electromagnetic field by means of a signal for exciting an oscillating circuit, provided with means (37) for regulating the signal phase in the oscillating circuit and a demodulator (38, DEMODP), **characterized in that** current values (I, VC1) of variables linked to the current in the oscillating circuit and to the voltage thereacross are compared with predetermined values ($I_{off\text{-}load}$, $VCI_{off\text{-}load}$) when the comparator detects no signal transmitted by a transponder (10), to detect the presence of such a transponder in the electromagnetic field.

2. The method of claim 1, **characterized in that** said predetermined values ($I_{off\text{-}load}$, $VC1_{off\text{-}load}$) are measured and stored during an off-load operation of the terminal (30, 60), while no transponder (10) is present in its field.

3. The method of claim 1 or 2, **characterized in that** it consists, in case of the detected presence of a transponder:

   of deactivating the phase regulation; and
   of forcing the imaginary part (X1) of the impedance (Z1) of the oscillating circuit of the terminal (30) to a predetermined value.

13

4. The method of claim 3, **characterized in that** the forcing of said imaginary part (X1) is performed by forcing the value (C1) of a variable capacitive element (31) of the oscillating circuit.

5. The method of claim 3 or 4, applied to a terminal (30) provided with an amplitude demodulator (38), **characterized in that** the predetermined value of forcing of said imaginary part (X1) corresponds to an off-load operation of the terminal.

6. The method of claim 3 or 4, applied to a terminal (30) provided with a phase demodulator (DEMODP), **characterized in that** the predetermined value of forcing of said imaginary part (X1) is a function of the position of this imaginary part with respect to a limiting value corresponding to an off-load operation of the terminal.

7. The method of any of claims 1 to 6, **characterized in that** it consists, in case of the detected presence of a transponder and in case of no data detection by an active demodulator among an amplitude demodulator (38) and a phase demodulator (37) included by the terminal (60), of selecting the other demodulator to detect the data.

8. A terminal (30, 60) of generation of an electromagnetic field adapted to cooperating with at least one transponder (10) when said transponder enters this field, including means for implementing the method of any of claims 1 to 7.

**Patentansprüche**

1. Ein Verfahren zur Steuerung eines Anschlusses (30, 60) zur Erzeugung eines elektromagnetischen Feldes mittels eines Signals zur Erregung einer Oszillations- oder Schwingungsschaltung, und zwar vorgesehen mit Mitteln (37) zum Regulieren bzw. Regeln der Signalphase in der Oszillationsschaltung und mit einem Demodulator (38, DEMODP), **dadurch gekennzeichnet, dass** die Stromwerte (I, VC1) von Variablen, die von dem Strom in der Oszillationsschaltung und der Spannung an ihren Anschlüssen abhängen, verglichen werden mit vorbestimmten Werten ($I_{off-load}$, $VC1_{off-load}$), wenn der Demodulator detektiert, dass kein Signal durch einen Transponder (10) übertragen wird, um das Vorhandensein eines derartigen Transponders in dem elektromagnetischen Feld zu detektieren.

2. Verfahren nach Anspruch 1, **dadurch gekennzeichnet, dass** die erwähnten vorbestimmten Werte ($I_{off-load}$, $VC1_{off-load}$) gemessen werden und gespeichert werden während eines Off-load-Betriebs des Anschlusses (30, 60), während kein Transponder (10) in dessen Feld vorhanden ist.

3. Verfahren nach Anspruch 1 oder 2, **dadurch gekennzeichnet, dass** es im Falle des detektierten Vorhandenseins eines Transponders folgendes vorsieht:

   Deaktivierung der Phasenregulierung; und
   zwangsweises Einstellen des Imaginärteils (X1) der Impedanz (Z1) der Oszillationsschaltung des Anschlusses (30) auf einen vorbestimmten Wert.

4. Verfahren nach Anspruch 3, **dadurch gekennzeichnet, dass** das zwangsweise Einstellen des Imaginärteils (X1) durchgeführt wird durch zwangsweises Einstellen des Werts (C1) eines variablen kapazitiven Elements (31) der Oszillationsschaltung.

5. Verfahren nach Anspruch 3 oder 4 angewandt auf einen Anschluss (30) vorgesehen mit einem Amplitudendemodulator (38), **dadurch gekennzeichnet, dass** der vorbestimmte Wert des zwangsweisen Einstellens des Imaginärteils (X1) einem unbelasteten oder Off-load-Betriebs des Anschlusses entspricht.

6. Verfahren nach Anspruch 3 oder 4, angewandt auf einen Anschluss (30) vorgesehen mit einem Phasendemodulator (DEMODP), **dadurch gekennzeichnet, dass** der vorbestimmte Wert des zwangsweisen Einstellens des erwähnten Imaginärteils (X1) eine Funktion der Position dieses Imaginärteils bezüglich eines Grenzwerts ist, entsprechend einem Off-Load-Betrieb des Anschlusses.

7. Verfahren nach einem der Ansprüche 1 bis 6, **dadurch gekennzeichnet, dass** Folgendes vorgesehen ist: im Falle des detektierten Vorhandenseins eines Transponders und im Falle eines Nichtdetektierens von Daten durch einen aktiven Demodulator unter einem Amplitudendemodulator (38) und einem Phasendemodulator (37) umfasst von dem Anschluss (60), Auswahl des anderen Demodulators um die Daten zu detektieren.

8. Anschluss (30, 60) zur Erzeugung eines elektromagnetischen Feldes geeignet zum Zusammenarbeiten mit mindestens einem Transponder (10), wenn der Transponder in dieses Feld eintritt, **dadurch gekennzeichnet, dass** Mittel vorgesehen sind zum Implementieren des Verfahrens nach einem der Ansprüche 1 bis 7.

Fig 1

Fig 2

Fig 3A

Fig 3B

Fig 4A

Fig 6

$$\text{MESURE} \quad I \text{ et } VC1 \quad 40$$

$$41 \quad \frac{VC1}{I} = \frac{VC1 \text{ vide}}{I \text{ vide}} \quad ? \quad O$$

$$X1 = \omega L1 - VC1/I \quad 44$$

$$45 \quad |X1| < |X1\text{lim}| \quad ?$$

$$47 \quad \frac{VC1}{I} > \frac{VC1 \text{ vide}}{I \text{ vide}} \quad ?$$

$$C1f = \frac{1}{\omega(\omega L1 + X1)} \quad 46$$

$$C1f = \frac{C1 \text{ vide}}{1 + k^2_{max}} \quad 48$$

$$C1f = \frac{C1 \text{ vide}}{1 - k^2_{max}} \quad 49$$

25

26

Fig 4B

Fig 5A

Fig 5B

**EP 1 154 366 B1**

**RÉFÉRENCES CITÉES DANS LA DESCRIPTION**

**Documents brevets cités dans la description**

- US 4963887 A
- US 5550536 A
- EP 0722094 A
- EP 0857981 A
- WO 9943096 A
- FR 2760280
- FR 2773627